# EUROPEAN PATENT APPLICATION

(11) **EP 2 659 813 A2**
(43) Date of publication of application: **06.11.2013**
(21) Application number: 11852586.4
(22) Date of filing: 29.12.2011
(51) Int. Cl.: A47K 10/24, A47K 10/44

(54) **APPARATUS FOR SUPPLYING WET TISSUE**

(30) Priority: 30.12.2010 KR 20100139615; 29.12.2011 KR 20110145485
(71) Applicant: Clean Finger Co., Ltd., Seoul 137-070 (KR)
(72) Inventor: HWANG, Sae Young, Seoul 137-070 (KR)
(74) Representative: Coralis Harle
(86) International application number: PCT/KR2011/010283
(87) International publication number: WO 2012/091477

(57) **Abstract**

Disclosed is a wet tissue feeding device which has a luxury image so as to be used in a hotel, a bank, an office or the like and also which can be easily and conveniently used and maintained. The wet tissue feeding device includes a tissue case in which multiple sheets of tissues are loaded; a tongs which picks up and withdraws the tissue from the tissue case; a tissue transporting means which transports the tissue withdrawn by the tongs in a feeding direction of the tissue; and a water injecting means which injects water on a surface of the tissue transported.

## Description

The present invention relates to a wet tissue feeding device, and more particularly, to a wet tissue feeding device which supplies moisture to a surface of dry tissue and thus feeds wet tissue.

Generally, the commercial wet tissue contains a large amount of chemical substances, and thus it is harmful to the human body. Particularly, in case of a baby or a child, it can cause allergy, and thus it is especially harmful.

As an alternative, various kinds of automatic wet tissue feeding devices have been proposed recently. However, in most of these wet tissue feeding devices, moisture is supplied to roll type tissue, and thus wet tissue can be fed. In use, the fed wet tissue may be cut along its own cutting line like in the typical roll type tissue, or may be cut by a blade provided at an outlet part of the feeding device.

As described above, the wet tissue provided from the conventional wet tissue feeding device has an image as toilet tissue, and thus it is inappropriate to use it in the luxury environment such as a hotel and an office. Further, there are other problems in that it is not facile to cut the wet tissue and the number of replacement parts is increased due to damage or wear of the blade.

An object of the present invention is to provide a wet tissue feeding device which has a luxury image so as to be used in a hotel, a bank, an office or the like and also which can be easily and conveniently used and maintained.

To achieve the object of the present invention, the present invention provides a wet tissue feeding device including a tissue case in which multiple sheets of tissues are loaded; a tongs which picks up and withdraws the tissue from the tissue case; a tissue transporting means which transports the tissue withdrawn by the tongs in a feeding direction of the tissue; and a water injecting means which injects water on a surface of the tissue transported.

Preferably, the water injection means comprises a water tank and an injection nozzle. And the tissue case is disposed at an upper side of the wet tissue feeding device and the tongs is disposed at a lower side thereof, and the tongs has a reciprocating cylinder structure which is movable up and down with respect to a conveyor belt in order to put the withdrawn tissue.

Preferably, the water injection means comprises the water tank and the injection nozzle. And the tissue case is disposed at the lower side of the wet tissue feeding device and the tongs is disposed at the upper side thereof. And the tongs is movable along a desired guide in order to transport the tissue withdrawn through the upper opened portion of the tissue case to a conveyor belt.

Preferably, the tissue case comprises a box body which has a desired height and of which an upper portion is provided with a cover and a lower portion is provided with an opening frame; a door which is disposed at a front surface of the box body so as to open and close the front surface and also replenish the tissue; and a weight plate which is disposed in the box body so as to fill up a space formed as the tissue is withdrawn and push down the loaded tissue toward the opening frame, and the door is slidably fitted to a rail formed at front ends of the box body, and the cover is formed with a passing hole which is corresponding to a cross section of the door in order to allow ascent of the door when opening the box body.

Preferably, the tissue case comprises a box body which has a desired height and of which the lower portion is provided with the cover and the upper portion is provided with the opening frame; a door which is disposed at the front surface of the box body so as to open and close the front surface and also replenish the tissue; and an elastic means which is disposed in the box body so as to fill up a space formed as the tissue is withdrawn and push up the loaded tissue toward the opening frame, and the door is slidably fitted to a rail formed at front ends of the box body, and the cover is formed with a passing hole which is corresponding to a cross section of the door in order to allow ascent of the door when opening the box body.

Preferably, the tissue case comprises a box body which has a desired height and of which upper and side portions are integrally formed to be closed and a lower portion is opened and provided with an opening frame, and the upper portion of the box body is provided with a handle which can be received in the upper portion of the box body.

Preferably, the opening frame which is coupled to the upper or lower portion of the tissue case is formed with a protrusion which is formed at at least one side in an internal space of the opening frame in order to support the tissue.

Preferably, the weight plate is formed with a guide protrusion formed at one side thereof so as to guide movement of the weight plate, and the box body is formed with a slide groove formed at one side thereof so as to guide movement of the protrusion, and the opening frame is formed with a protrusion groove which is communicated with the slide groove so as to guide movement of the guide protrusion.

As described above, since the wet tissue feeding device is configured so that the multiple sheets of wet tissue are folded and thus fed by one sheet at a time, it is convenient in use, and also since it has a luxury image, it can be used in a hotel, a bank, an office or the like.

Further, since the wet tissue feeding device is configured so that each sheet of wet tissue is withdrawn by tongs and then fed through the conveyor belt, the wet tissue can be rapidly fed with a low failure rate.

The above and other objects, features and advantages of the present invention will become apparent from the following description of preferred embodiments given in conjunction with the accompanying drawings, in which:

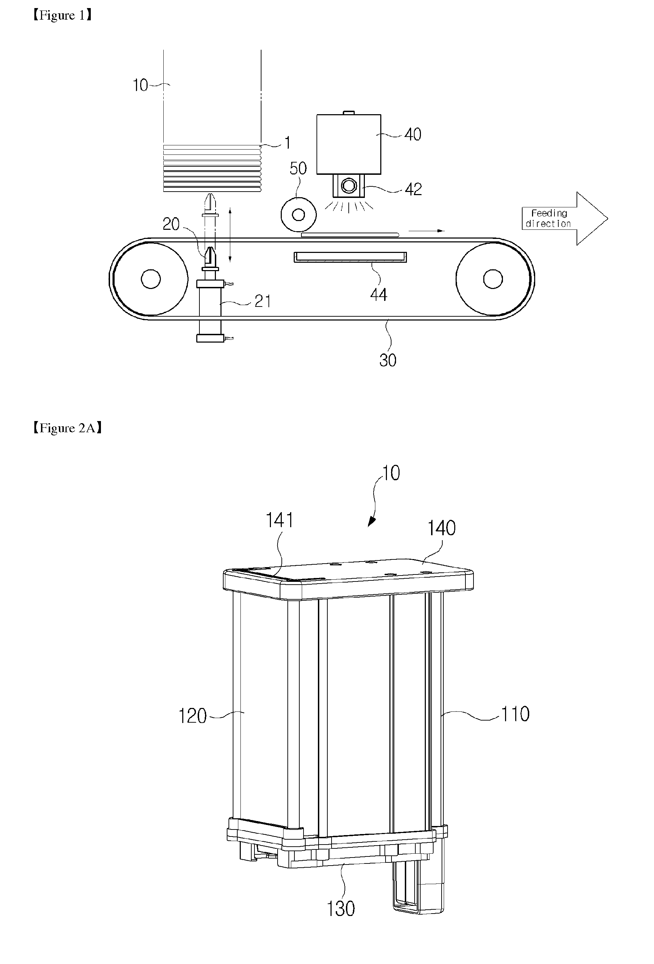

Fig. 1 is a schematic view showing an operating configuration of a wet tissue feeding device according to a first embodiment of the present invention.

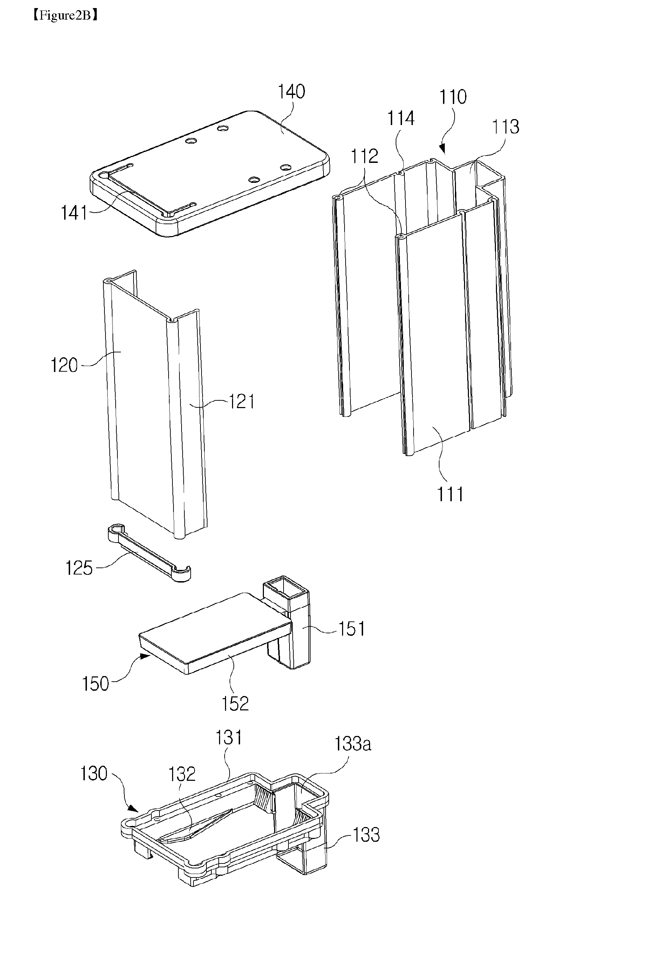

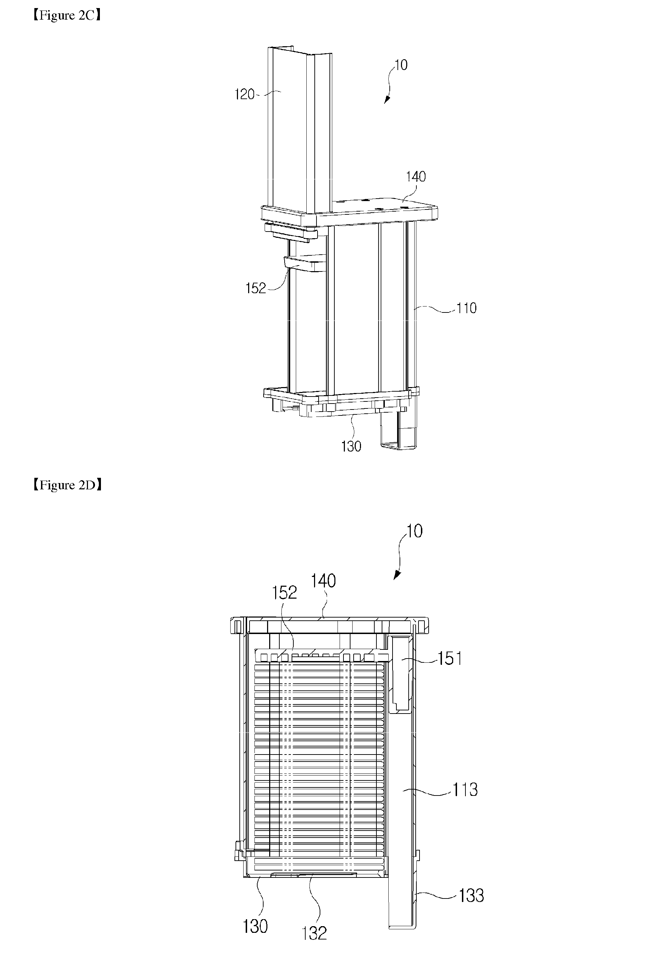

Fig. 2 is a view showing a tissue case provided at the wet tissue feeding device according to the present invention, wherein Fig. 2a is an exploded perspective view of the tissue case, Fig. 2b is a view showing an assembled state thereof, Fig. 2c is a view showing an operating configuration thereof when opening a door, and Fig. 2d is a view showing a state that multiple sheets of tissue are loaded therein.

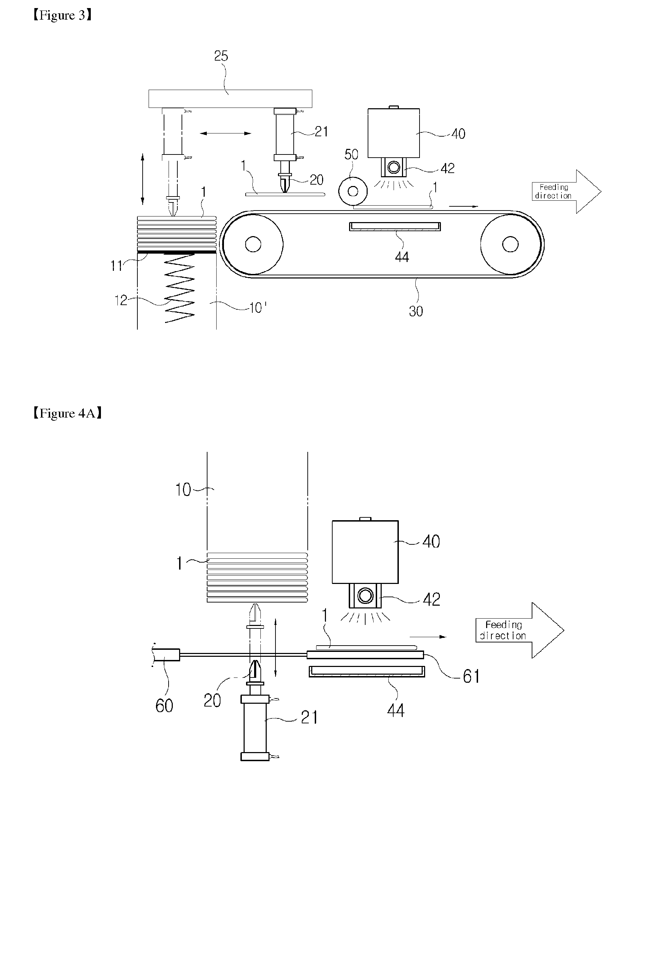

Fig. 3 is a schematic view showing an operating configuration of a wet tissue feeding device according to a second embodiment of the present invention.

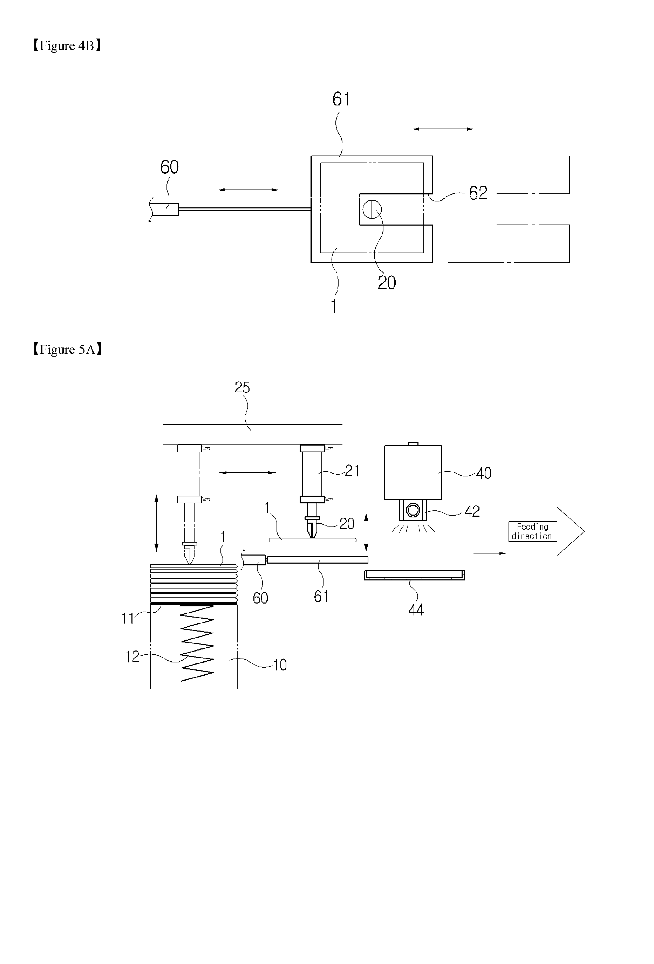

Fig. 4 is a schematic view showing a wet tissue feeding device according to a third embodiment of the present invention, wherein Fig. 4a is a view showing an operating configuration of the wet tissue feeding device having a tissue conveying means different from that of Fig. 1 according to a third embodiment of the present invention, and Fig. 4b is a plane view of the tissue conveying means.

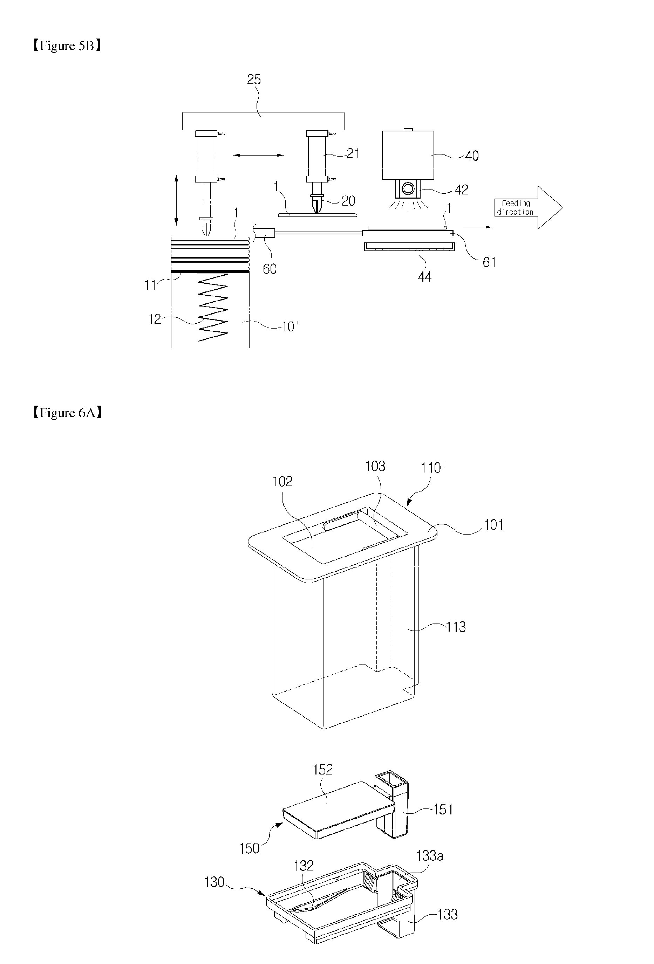

Fig. 5 is a schematic view showing a wet tissue feeding device according to a fourth embodiment of the present invention, wherein Fig. 5a is a view showing an operating configuration of the wet tissue feeding device having other tissue conveying means different from that of Fig. 3 according to a fourth embodiment of the present invention, and Fig. 5b is a view showing an operating configuration of the tissue conveying means of Fig. 5a.

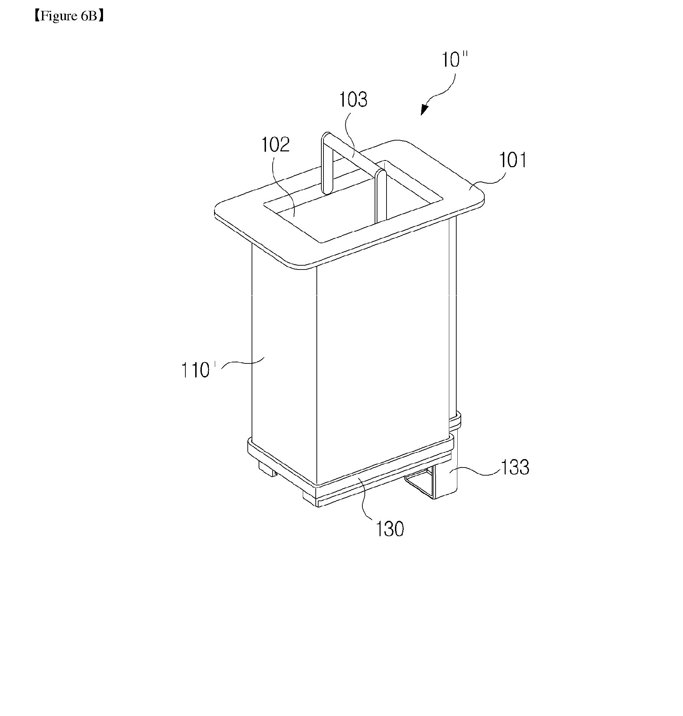

Fig. 6 is a view showing a modified example of the tissue case provided at the wet tissue feeding device according to the present invention, wherein Fig. 6a is an exploded perspective view of the tissue case, and Fig. 6b is a view showing an assembled state.

Hereinafter, the embodiments of the present invention will be described in detail with reference to accompanying drawings.

The same reference numerals are given to the same or corresponding parts, and the description thereof will not be repeated.

### First embodiment

Fig. 1 is a schematic view showing an operating configuration of a wet tissue feeding device according to a first embodiment of the present invention. Herein, multiple sheets of dry tissue 1 loaded in a tissue case 10 are withdrawn by tongs 20 and then fed by a conveyor belt 30. In this process, moisture supplied from a water tank 40 is injected thereon so that a surface of the tissue 1 is wet, thereby feeding wet tissue.

Referring to Fig. 1, the tissue case 10 and water tank 40 are disposed at an upper side of the wet tissue feeding device, and the tongs 20 is disposed at a lower side thereof. In particular, in order to put the tissue on the conveyor belts 30, the tongs 20 is disposed to be movable up and down between the conveyor belts 30. To this end, a body 21 of the tongs 20 preferably has a reciprocating cylinder structure.

Meanwhile, a reference numeral 42 designates an injection nozzle, 44 is a water bucket and 50 is a holding roller. In the embodiment, the holding roller 50 is closely contacted with an upper surface of the tissue 1 so as to stably convey the tissue and also prevent floating of the tissue 1 due to grasping of the tongs 20.

Fig. 2 is a view showing the tissue case provided at the wet tissue feeding device according to the present invention, wherein Fig. 2a is an exploded perspective view of the tissue case, Fig. 2b is a view showing an assembled state thereof, Fig. 2c is a view showing an operating configuration thereof when opening a door, and Fig. 2d is a view showing a state that multiple sheets of tissue are loaded therein.

According to the present invention, the tissue case 10 includes a box body 110 which is provided with a cover 140 and an opening frame 130 and has a desired height, and a door 120 which opens and closes a front surface of the box body 110 in order to replenish the tissue. And a weight plate 150 which is disposed in the box body 110 so as to fill up a space formed as the tissue 1 is withdrawn and push down the tissue 1 toward the opening frame 130 is also provided in the box body 110. The weight plate 150 is a plate member having a desired weight. A guide protrusion 151 is formed at one side of the weight plate 150, and the box body 110 is also formed with a slide groove 113 which functions to guide descent of the guide protrusion 151.

The door 120 is disposed at a front end of the box body 110 so as to open and close the box body 110. To this end, a rail 112 is formed at an front end of each side surface 111 of the box body 110, and both side ends of the door 120 is slidably fitted to the rail 112.

The cover 140 is formed with a passing hole 141 which is corresponding to a cross section of the door 120 in order to allow ascent of the door 120 when opening the box body 110.

The opening frame 130 has a structure which is opened up and down so that the tissue can be passed through, and a protrusion 132 is formed at at least one side in an internal space of a body 131 of the opening frame 130 in order to support the tissue 1 received in the box body 110. Further, a protrusion groove 133a which is communicated with the slide groove 113 of the box body 110 so as to guide the descent of the guide protrusion 151 is formed at one side of the body 131.

By the structure as described above, the tissue 1 received in the box body 110 of the tissue case 10 can be withdrawn to the outside through the internal space of the opening frame 130, and the tissue 1 remained in the box body 110 is moved down, in turn, by the weight plate 150.

Fig. 6 is a view showing a modified example of the tissue case provided at the wet tissue feeding device according to the present invention, wherein Fig. 6a is an exploded perspective view of the tissue case, and Fig. 6b is a view showing an assembled state.

In the modified example, unlike in Fig. 2, the tissue case 10" has a configuration in which a lower portion of the box body 110' is opened, and upper and side portions thereof are integrally formed to be closed. And the cover and door shown in Fig. 2 are removed completely. In such structure, the opening frame 130 which is removably disposed at the lower portion of the box body 110' is separated from the box body 110', and then the tissue is replenished in the tissue case 10". Even though not shown in drawings, the tissue may be replenished in a bundle or case type. This structure may be also applied to that in Fig. 2.

The opening frame 130 has a structure which is opened up and down so that the tissue can be passed through and withdrawn, and at least one protrusion 132 is formed in an internal space of the opening frame 130 in order to support the tissue 1 received in the box body 110'.

In the tissue case 10" of the modified example, like in Fig. 2, the weight plate 150 is disposed in the box body 110' so as to push down the tissue 1 toward the opening frame 130. The guide protrusion 151 of the weight plate 150 is formed to be slid down along the slide groove 113 formed at one side of the box body 110'.

Further, in the tissue case 10", a handle 103 may be provided at an upper portion of the box body 110' so that the tissue case 10" is facilely transported and removed in/from the feeding device of the present invention. Further, an upper surface 101 of the box body 110' is formed with a recessed portion 102 so that the handle 103 can be received therein.

### Second embodiment

Fig. 3 is a schematic view showing an operating configuration of a wet tissue feeding device according to a second embodiment of the present invention. Herein, multiple sheets of dry tissues 1 loaded in a tissue case 10' are withdrawn by tongs 20 and then fed by a conveyor belt 30. In this process, moisture supplied from a water tank 40 is injected thereon so that a surface of the tissue 1 is wet, thereby feeding wet tissue. Basically, the wet tissue feeding device of the embodiment has the same configuration as in Fig. 1.

However, unlike in Fig. 1, the second embodiment is different from the first embodiment in that the tissue case 10' is disposed at a lower side of the wet tissue feeding device and the tongs 20 is disposed at an upper side thereof. Further, in case of the tissue case 10', an upper portion thereof is opened in order to withdraw the tissue using the tongs 20. Even though not shown in drawings, the tissue case 10' of the embodiment has a configuration that the tissue case 10 of Fig. 2 is turned upside down.

In case of the tissue case 10', the tissue 1 is put on a support plate 11 similar to the weight plate 150 of Fig. 2 so that the support plate 11 fills up a space formed as the tissue 1 is withdrawn and pushes up the tissue toward an opened upper portion of a box body. Preferably, the support plate 11 is elastically supported by an elastic means 12 such as a spring disposed at a lower portion of the support plate 11, and the tissue 1 received in the box body is moved up by ascent of the support plate 11.

Furthermore, the tongs 20 is configured to withdraw the tissue 1 through the opened upper portion of the box body. As shown in Fig. 2, in order to transport the tissue 1 withdrawn from the tissue case 10' to a conveyor belt 30, the tongs 20 is configured to be movable along a guide 25. To this end, the guide 25 is preferably arranged at an upper side of the tissue case 10' to be directed to the conveyor belt 30.

In addition, the tongs 20 is configured to be movable up and down toward the conveyor belt 30. To this end, a body 21 of the tongs 20 preferably has a reciprocating cylinder structure.

Meanwhile, a reference numeral 42 designates an injection nozzle, 44 is a water bucket and 50 is a holding roller. The holding roller 50 has the same purpose as that in Fig. 1.

### Third embodiment

Fig. 4 is a schematic view showing a wet tissue feeding device according to a third embodiment of the present invention, wherein Fig. 4a is a view showing an operating configuration of the wet tissue feeding device having a tissue conveying means different from that of Fig. 1 according to a third embodiment of the present invention, and Fig. 4b is a plane view of the tissue conveying means.

In the wet tissue feeding device of the third embodiment, the conveyor belt is removed from the configuration of Fig. 1, and a driving cylinder 60 which is reciprocated backward and forward so as to transport the tissue 1 is provided instead.

The driving cylinder 60 has a transport plate 61 which is extended in a feeding direction of the tissue, and the transport plate 61 may be passed through an injection nozzle 42 connected to a water tank 40 and extended to an outlet of the tissue.

Since the wet tissue feeding device of the embodiment has a basic configuration that the tissue is withdrawn by a tongs 20 which is movable up and down from a lower side of a tissue case 10, the transport plate 61 is preferably formed with a desired passing hole 62 through which the tongs 20 is passed, as shown in Fig. 4b.

The tongs 20 releases the tissue while being descended through the passing hole 62, and thus the tissue can be put on the transport plate 61.

### Fourth embodiment

Fig. 5 is a schematic view showing a wet tissue feeding device according to a fourth embodiment of the present invention, wherein Fig. 5a is a view showing an operating configuration of the wet tissue feeding device having other tissue conveying means different from that of Fig. 3 according to a fourth embodiment of the present invention, and Fig. 5b is a view showing an operating configuration of the tissue conveying means of Fig. 5a.

In the wet tissue feeding device of the fourth embodiment, the conveyor belt is removed from the configuration of Fig. 3, and a driving cylinder 60 which is reciprocated backward and forward so as to transport the tissue 1 in a feeing direction is provided instead.

The driving cylinder 60 has a transport plate 61 which is extended in a feeding direction of the tissue, and the transport plate 61 may be passed through an injection nozzle 42 connected to a water tank 40 so as to be extended to an outlet of the tissue.

Since the wet tissue feeding device of the embodiment has a basic configuration that the tissue is withdrawn by a tongs 20 which is movable up and down from a lower side of a tissue case 10' and the tongs 20 is movable along a guide 25 so as to transport the tissue to the transport plate 61, the tongs 20 releases the tissue while being descended to the transport plate 61, and thus the tissue can be put on the transport plate 61.

While the present invention has been described with respect to the specific embodiments, it will be apparent to those skilled in the art that various changes and modifications may be made without departing from the spirit and scope of the invention as defined in the following claims.

According to the present invention, since the wet tissue feeding device is configured so that the multiple sheets of wet tissue are folded and thus fed by one sheet at a time, it is convenient in use, and also since it has a luxury image, it can be used in a hotel, a bank, an office or the like.

Further, since the wet tissue feeding device is configured so that each sheet of wet tissue is withdrawn by tongs and then fed through the conveyor belt, the wet tissue can be rapidly fed with a low failure rate.

## Claims

1. A wet tissue feeding device, comprising:
a tissue case in which multiple sheets of tissues are loaded;
a tongs which picks up and withdraws the tissue from the tissue case;
a tissue transporting means which transports the tissue withdrawn by the tongs in a feeding direction of the tissue; and
a water injecting means which injects water on a surface of the tissue transported.

2. The wet tissue feeding device according to claim 1, wherein the water injection means comprises a water tank and an injection nozzle.

3. The wet tissue feeding device according to claim 1, wherein the tissue case is disposed at an upper side of the wet tissue feeding device and the tongs is disposed at a lower side of the wet tissue feeding device, or the tissue case is disposed at the lower side of the wet tissue feeding device and the tongs is disposed at the upper side of the wet tissue feeding device.

4. The wet tissue feeding device according to claim 3, wherein the tongs has a reciprocating cylinder structure which is movable up and down with respect to a conveyor belt in order to put the withdrawn tissue.

5. The wet tissue feeding device according to claim 3, wherein the tissue case comprises a box body which has a desired height and of which an upper portion is closed by a cover and an opening frame is disposed at a lower portion thereof so as to open the lower portion thereof, or the lower portion is closed by the cover and the opening frame is disposed at the upper portion thereof so as to open the upper portion thereof, and a door which is disposed at a front surface of the box body so as to open and close the front surface and also replenish the tissue, and
wherein the door is slidably fitted to a rail formed at front ends of the box body, and the cover is formed with a passing hole which is corresponding to a cross section of the door in order to allow ascent of the door when opening the box body.

6. The wet tissue feeding device according to claim 3, wherein the tissue case comprises a box body which has a desired height and of which upper and side portions are integrally formed to be closed and a lower portion is opened and provided with an opening frame, and the upper portion of the box body is provided with a handle which can be received in the upper portion of the box body.

7. The wet tissue feeding device according to claim 5 or 6, wherein the tissue case further comprises a weight plate which is disposed in the box body so as to fill up a space formed as the tissue is withdrawn and push down the loaded tissue toward the opening frame.

8. The wet tissue feeding device according to claim 5 or 6, wherein the tissue case further comprises an elastic means which is disposed in the box body so as to fill up a space formed as the tissue is withdrawn and push up the loaded tissue toward the opening frame.

9. The wet tissue feeding device according to claim 5 or 6, wherein the opening frame is formed with a protrusion which is formed at at least one side in an internal space of the opening frame in order to support the tissue.

10. The wet tissue feeding device according to claim 4, wherein the tongs is movable along a guide in order to transport the tissue withdrawn through an upper opened portion of the tissue case to a conveyor belt.

11. The wet tissue feeding device according to claim 1, wherein the tissue transporting means is a conveyor belt which is driven in a feeding direction of the tissue, or a driving cylinder which is reciprocated backward and forward in the feeding direction of the tissue.

12. The wet tissue feeding device according to claim 11, wherein the driving cylinder comprises a transport plate which is extended in the feeding direction of the tissue.

13. The wet tissue feeding device according to claim 12, wherein the transport plate is passed through an injection nozzle connected to a water tank and extended to an outlet of the tissue.

14. The wet tissue feeding device according to claim 12 or 13, wherein the transport plate is formed with a passing hole through which the tongs can be moved up and down toward the tissue case.

15. The wet tissue feeding device according to claim 5 or 6, wherein the weight plate is formed with a guide protrusion formed at one side thereof so as to guide movement of the weight plate, and the box body is formed with a slide groove formed at one side thereof so as to guide movement of the protrusion, and the opening frame is formed with a protrusion groove which is communicated with the slide groove so as to guide movement of the guide protrusion.
